# EUROPEAN PATENT SPECIFICATION

(11) **EP 2 547 712 B1**
(45) Date of publication and mention of the grant of the patent: **21.03.2018**
(21) Application number: 11755791.8
(22) Date of filing: 27.01.2011
(51) Int. Cl.: C08G 63/86, C08G 63/85

(54) **CATALYST SYSTEM AND PROCESS FOR PREPARING OF POLYESTER RESINS, FIBRE, FILAMENTS AND YARN USING SAID CATALYST SYSTEM**
KATALYSATORSYSTEM UND VERFAHREN ZUR HERSTELLUNG VON POLYESTERHARZEN, FASERN, FILAMENTE UND GARNEN MIT DIESEM KATALYSATORSYSTEM
SYSTÈME DE CATALYSEUR ET PROCÉDÉ DE PRÉPARATION DE RÉSINES, FIBRES, FILAMENTS ET FILS POLYESTER À L'AIDE DUDIT SYSTÈME DE CATALYSEUR

(30) Priority: 17.03.2010 IN 702MU2010
(43) Date of publication of application: 23.01.2013
(73) Proprietor: Reliance Industries Limited, Navi Mumbai - 400 701 Maharashtra (IN)
(72) Inventor: AYODHYA, Srinivasacharya Ramacharya, Maharashtra (IN); LIMAYE, Chetan Vijay, Maharashtra (IN); PUSHAP, Sudan, Maharashtra (IN); JADIMATH, Shivamurthy Padadayya, Maharashtra (IN); PAWASHE, Nandkumar Gopal, Maharashtra (IN); BHANGALE, Vikas, Kadu, Maharashtra (IN)
(74) Representative: J A Kemp
(86) International application number: PCT/IN2011/000053
(87) International publication number: WO 2011/114348

(56) References cited:
- GB-A- 1 236 949
- JP-A- 52 123 489
- JP-A- 53 052 595
- US-A- 3 796 691
- US-A1- 2007 191 582

## Description

The present invention relates to the preparation of polyester resins, fibre, filaments and yarn.

Polyesters such as polyethylene terephthalate (PET) are used in large quantities in the manufacture of textile fibers, packaging films and containers. Typically, such polyesters are synthesized by a catalyzed two-stage reaction. In the first stage, esterification reaction (∼260°C) is carried out between a dicarboxylic acid and a polyol. The esterification reaction is followed by melt polymerization wherein the ester formed in the first stage undergoes polycondensation (∼290°C) resulting in polyester. Often the polyester obtained after melt polymerization is further subjected to solid-state polymerization.

Conventionally, trivalent antimony compounds like antimony trioxide (∼250-300ppm as Sb) and its alcohol derivatives are used as ester polymerization catalysts. However, when used alone as the catalyst, the activity for polyester synthesis of antimony compounds is rather limited. Lower catalyst activity would require longer residence times for synthesis of resins of desired molecular weight. This in turn limits the productivity, plant throughput and results in high production cost. Long residence time and high temperatures causes degradation, which further affects color of the resin. There is a need for a catalyst system having improved activity to enhance productivity and L color of the polyester resin in continuous plants. It is well known in the prior art that some catalysts (e.g. titanium) work very well in the liquid, or melt polymerization step, but do not catalyze the reaction in the solid phase step. The catalyst choice is also important because it is also known that different catalysts will affect the amount of acetaldehyde generated when the polyester resin is re-melted and injection molded into a preform or cast into a sheet.

Organotin compositions, including organotin oxides, hydroxides, alkoxides and carboxylates are effective as catalysts in the manufacture of polyester resins and polyester-containing compositions. The use of organotin catalysts decreases the time required to complete esterification or transesterification of polyester compositions and to effectuate a complete reaction. US Patent No. 2720507 teaches a process for preparing polyesters which comprises condensing a diester of a dicarboxylic acid with a polyhydroxy compound in the presence of at least one of a group of novel catalytic condensing agents which are organic derivatives of tin. US Patent No. 2892815 discloses stannous formate catalyst for preparing polyethylene terephthalate. US Patent No. 3162616 relates to a process for preparing polyesters in an improved manner using a novel class of catalysts containing tin. This patent discloses polyesters having an acid number less than 5 and even those having an acid number less than one can be prepared in relatively short periods of time free form discoloration.

US Patent No. 3345339 discusses the preparation of unsaturated polyesters of a polyol in the presence of an esterification catalyst comprising tin catalysts. US Patent No. 3489720 discloses a process of preparing polyethylene terephthalate resin in the presence of a metal salt of stannic acid wherein the metal component of the salt is from Group II-B and VII-B of the Periodic Table. US Patent No. 3716523 discloses a method for making a polyester having an acid number of less than 1 which involves heating a polyhydric alcohol and a polycarboxylic acid in the absence of a catalyst until an acid number of 30 or less is obtained and then continuing the esterification in the presence of a stannous salt of a carboxylic acid until the acid number is near zero.

US Patent No. 4970288 describes the use of non-toxic organotin esterification catalysts in the production of polyester and polyester-containing compositions. US Patent No. 5166310 describes a process for the preparation of polyesters in the presence of a combination of tin catalysts only. This patent discloses that polyesters are prepared from dihydroxyl-containing compounds and di-carboxylic acids or anhydrides or lower alkyl esters thereof in the presence of a combination of tin catalysts comprising at least one organotin salt of a carboxylic acid, and either at least one organotin oxide, or at least one organostannoic acid, or a combination. US Patent No. 4393191 describes a process of direct polymerization of aromatic hydroxyl acids which is conducted in the presence of a group IV or V metallic catalyst. The catalyst described is a salt, oxide or organometallic derivative of antimony, titanium, tin or germanium, with tin compounds being the most preferred for reasons of catalyst activity. US Patent No. 4837245 describes a method to prepare a polyester polyol through the polycondensation of organic polycarboxylic acids with multivalent alcohols in the presence of from 0.002 to 5 weight percent, based on the weight of the mixture composed of polycarboxylic acids and multivalent alcohols, of at least one titanium and/or tin compound, preferably an organic titanic acid ester.

In spite the prior art teachings discussed above, there still exists a need for catalyst or catalyst system which will provide acceptable solid phase polymerization rates yet form a reduced amount of acetaldehyde. The use of antimony and tin catalyst combinations are well known in the old polyester art. Antimony compounds and tin compounds (organo or inorganic) alone or in combination are can be used. JP 54135896 discloses the use of the antimony, tin, cobalt and an alkali metal during melt polycondensation catalyst to produce a good color resin for films. JP 54135896 discloses nothing about the ability of the catalyst to function as a solid phase polymerization catalyst or the role of the catalyst in reducing the amount of acetaldehyde generated during subsequent melt processing. JP 52123489 discloses the use of the antimony and tin during melt polycondensation catalyst to produce a good color resin for films. JP 52123489 also discloses nothing about the ability of the catalyst to function as a solid phase polymerization catalyst or the role of the catalyst in reducing the amount of acetaldehyde generated during subsequent melt processing.

JP 53052595 discloses the use of the antimony and tin during melt polycondensation to produce a good color resin for films. JP 53052595 discloses nothing about the ability of the catalyst to function as a solid phase polymerization catalyst or the role of the catalyst in reducing the amount of acetaldehyde generated during subsequent melt processing. JP51127195 discloses that fiber forming polyesters of superior brightness can be manufactured by direct esterification of terephthalic acid of medium grade purity, followed by polycondensation with a specific catalyst. JP 53144998 discloses the preparation of polyester by the reaction of a dicarboxylic acid with a glycol in the presence of a specific organo-tin compound, thereby maintaining the high catalytic activity of the organo-tin compound, and preventing the clogging of filter at the filtration of the reaction product.

US20070191582 discloses a process for producing a polyester resin having a low acetaldehyde generation rate comprised of the steps of polycondensing the polyester resin in the presence of tin and antimony; wherein the tin is present within the range of 50 to 110 ppm of the polyester resin and the antimony is present from 105 ppm to 265 ppm of the polyester resin, and solid phase polymerizing the polyester resin for sufficient time so as to increase the intrinsic viscosity of the polyester resin by at least 0.15 dl/g. This document also covers product by process by claiming a low acetaldehyde generation polyester resin made using a solid state process, wherein said polyester resin comprises a catalyst composition comprises tin and antimony. However, the preferred way of adding composite catalyst is after esterification step, immediately prior to the polycondensation step.

US Patent No. 3660358 discloses the preparation of polyesters by reacting the selected starting materials in the presence of a metallic catalyst consisting of antimony, at least one member selected from the group consisting of lead and tin, and an alkali metal in amounts of from 0.005 to 1% by weight based upon the amount of carboxylic acids in the process. GB1236949 demonstrated the use of organo as well as inorganic tin compounds along with antimony compounds as catalyst for polyesters synthesis with a short reaction cycle time and having superior visual appearance. The antimony and tin compounds are added at the same time and at any stage from the start of the preparation of the bis (#-hydroxyalkyl) terephthalate, or the antimony or the tin compound may be added first followed by the second compound. However, this document does not discuss any thing on solid state polymerization. Further, it discloses nothing about the catalyst ability to function as a solid phase polymerization catalyst or the role of the catalyst in reducing the amount of acetaldehyde generated during subsequent melt processing.

US Patent No. 5714570 discloses a method for preparing polyester by use of a composite catalyst of antimony, tin, in combination with titanium as a melt polycondensation catalyst. The method can considerably reduce both the esterification time and the polycondensation time and provides a good color in the prepared polyesters. However, this patent document discloses nothing about the catalyst ability to function as a solid phase polymerization catalyst or the role of the catalyst in reducing the amount of acetaldehyde generated during subsequent melt processing. WO 2001056694 discloses the esterification catalyst compositions comprising of novel organometallic compositions based on a combination of titanium or zirconium with other metals. The catalyst composition suitable for use as a catalyst for the preparation of an ester comprises an organometallic compound which is a complex of a first metal selected from the group consisting of titanium or zirconium, a second metal selected from the group consisting of germanium, antimony or tin, and a carboxylic acid. US Patent No. 7297804 discloses catalytic composition of organotin compounds for esterification, transesterification and polycondensation reactions, a process for the catalysis of said reactions employing such catalytic compositions and polyesters or resins obtainable by this process.

US 2007/0191582 discloses a process for producing a polyester resin in the presence of a catalyst system containing an organotin catalyst.

From the discussion above, it is clear that the use of inorganic tin compounds in combination with antimony compounds as a catalyst for polyester preparation according to the present invention is not known in prior art. Though some documents show that antimony and tin compounds can be added together at any stage from the start of the preparation of polyester, none of the documents describe the preparation of inorganic tin compound slurry in monoethylene glycol without nitrogen blanketing which is fairly stable at room temperature and easy to handle. The present invention demonstrates that using inorganic tin compounds by the process of the present invention helps in uniform distribution of catalyst in polymer matrix resulting in better properties compared to conventional antimony and organo tin compounds catalyst which is comparatively difficult to disperse uniformly in polyester matrix.

It is an important object of the present invention to provide a catalyst system comprising an antimony compound and inorganic tin compound for the preparation of polyester resins.

Another object of the present invention is to provide a catalyst system that reduces the polymerization time at all stages of polyester synthesis, i.e, esterification, polycondensation and solid state polymerization.

A further object of the present invention is to provide a catalyst system that reduces the generation of degradation products.

Yet another object of the present invention is to provide a process for preparing polyester resin using said catalyst system.

Still another object of the present invention is to provide a polyester resin with improved properties for end-use applications.

Yet another object of the present invention is to provide a process for preparing fast reheat polyester resin with improved color using said catalyst system.

### SUMMARY OF THE INVENTION

Accordingly, the present invention provides a process for the preparation of polyester in presence of antimony and inorganic tin compound catalyst system comprising of steps
a) esterifying at least one dicarboxylic compound selected from dicarboxylic acid or mono-esters thereof or di-ester thereof or acid anhydride thereof and at least one diol or polyol at temperature in the range of 250°C to 290°C to obtain an esterified mixture;
b) melt polymerizing the esterified mixture at temperature in the range of 260°C to 300°C to obtain polyester prepolymer having IV of 0.3 to 0.6 dl/g;
c) producing prepolymer amorphous particles from the polyester obtained in step (b);
d) solid state polymerizing the amorphous prepolymer particles to obtain a high molecular weight polyester resin having IV of 0.70 dl/g to 1.2 dl/g
wherein inorganic tin compound is in stable slurry form prepared at high concentration up to 15% using ball mill without nitrogen blanketing at room temperature and is added at any step of polymerization and antimony compound in solution form prepared in monoethylene glycol is added after esterification reaction.

In a preferred embodiment, the inorganic tin compound is selected from group consisting of tin oxalates, tin chlorides, tin fluorides, tin sulphate or mixtures thereof and is present in an amount of 5 to 50 ppm.

Preferably, the inorganic tin compound is added as a liquid or slurry in ethylene glycol at any stage of esterification or melt polymerization such as in slurry mixing tank, slurry feed tank or oligomer line.

In the catalyst system of the present invention, the inorganic tin compound and antimony compound act synergistically evincing unexpected and improved properties in terms of color and reactivity. In addition it is very easy to handle because slurry with higher concentration up to 15% can be prepared in a ball mill at normal room temperature without any nitrogen blanketing. Slurry is fairly stable at room temperature and can be add at any stage during polymerization process. Also the Inorganic tin compound has melting point of 280°C and it decomposes at > 400°C. The polymerization process temperatures are in the range of 250-290°C. At that temperature the inorganic tin compound gets melted and distributed uniformly in the polymer matrix resulting in improved properties.

Preferably, said antimony compound is selected from one or more of antimony trioxide, antimony tetraoxides or antimony pentoxides, antimony carboxylates such as antimony triacetate, antimony tristearate, antimony halide such as antimony trichloride or antimony trifluoride. Antimony trioxide and antimony triacetate are mpreferred.

Preferably, said antimony compound is present in the range of 280-290 ppm of elemental antimony, in the polyester resin

Preferably, said inorganic tin compound is present within the range of 10-50 ppm of the polyester resin, more preferably 40 ppm.

The dicarboxylic acid or its monoesters thereof or di-esters thereof are preferably selected from terephthalic acid, isophthalic acid, naphthalene dicarboxylic acid or 4,4'-biphenyl dicarboxylic or any suitable dicarboxylic acids or monoesters thereof or di-esters thereof or combinations thereof.

Preferably, the dicarboxylic acid is terephthalic acid. The acid anhydride is optionally used instead of dicarboxylic acid or monoester or diester thereof and selected from phthalic anhydride or trimellitic anhydride or pyromellitic anhydride or any suitable anhydride.

The term polyol is intended to cover any suitable alcohol containing two or more hydroxyl groups known to those skilled in the art.

The monoalcohol, diol or polyol is selected from monoethylene glycol, diethylene glycol, triethylene glycol, propylene glycol, dipropylene glycol, butylenes glycol or 1,4-cyclohexane diol, 2-methyl-2, 3-propane diol, neopentylglycol or any suitable polyol or combinations thereof.

Preferably, the ratio of dicarboxylic acid or monoesters thereof or diesters thereof to diol to polyol ratio is in the range from about 1:1 to about 1: 3.

In another embodiment of the present invention, a process for the preparation of polyester resin using catalyst system comprising of antimony and inorganic tin compound is disclosed.

Preferably, a process for the preparation of polyester resin is disclosed wherein said inorganic tin compound forms stable slurry.

Preferably, said slurry can be and is prepared at high concentration up to 15%.

Preferably, said slurry can be and is prepared at room temperature without nitrogen blanketing.

Preferably, said slurry is stable at room temperature and may be added at any stage of polymerization process.

Preferably, a process for the preparation of polyester resin is disclosed wherein said inorganic tin compound is uniformly distributed in the polymer matrix.

In yet another embodiment of the present invention, a polyester resin prepared by said process using said catalyst is disclosed.

Preferably, said polyester has improved colour and improved properties for end-use applications.

In yet another embodiment of the present invention, 1,3:2,4-bis (3,4-Dimethylbenzylidine) sorbitol prepared by the said process is disclosed.

In yet another embodiment, the present invention provides a process for preparing fast reheat polyester resin with improved color using said catalyst system. A catalyst system for preparing fast reheat polyester resin comprising of from 100-400 ppm of one or more antimony compounds and from 5 to 300 ppm, preferably 5-50 ppm of inorganic tin metal compounds, preferably tin oxalate and a variety of black and gray body absorbing compounds such as black iron oxide, elemental antimony, carbon black, graphite, copper compounds, charcoal, activated carbon, antimony tin oxide, tin nitride and like others wherein said catalyst reduces the polymerization time at all stages of polyester synthesis and improve resin color with fast reheat property

### DETAILED DESCRIPTION OF THE INVENTION

The present invention discloses a catalyst system comprising of inorganic tin compounds along with antimony as a catalyst system for polyester polymerization and also for reducing the polymerization time and thus enhances the productivity. The reduction in polymerization time will reduces the degradation reactions thus improving polymer quality. The process claimed also improves color of polyester resin, fibre, filament and yarn. Use of such catalyst reduces polymerization time at all stages of polyester synthesis i.e., esterification, polycondensation and solid state polymerization. It also reduces degradation products e.g. acetaldehyde and produces polyester with improved L color.

It is well known that the handling of the solid organotin compounds is difficult as slurry preparation in ball mill is very difficult because of the surface hardness of the compound. Also, oxidation takes place in normal atmosphere, which causes deterioration of the color. Solution preparation with lower concentration (<1%) is possible but it requires higher temperatures (>150°C) and nitrogen blanketing to avoid oxidation. Generally the organotin compounds have poor thermal stability and tend to thermally decompose at temperatures beyond 230°C. Organotin compounds such as DBTO, DOTO generally imparts reddish/violet tinge to polymer when used beyond 40 - 50 ppm levels.

The present invention discloses that the catalyst composition used in the present invention comprising inorganic tin compound is synergistic in nature evincing unexpected and improved properties. In addition it is very easy to handle because slurry with higher concentration up to 15% can be prepared in a ball mill at normal room temperature without any nitrogen blanketing. Slurry is fairly stable at room temperature and can be add at any stage during polymerization process. Also the Inorganic tin compound has melting point of 280°C and it decomposes at > 400°C.The polymerization process temperatures are in the range of 250-290°C. At that temperature the inorganic tin compound gets melted and distributed uniformly in the polymer matrix resulting in improved properties. In amost preferred embodiment, catalyst system comprises of antimony trioxide in the range of 280-290 ppm and inorganic tin in the range of 20-40 ppm, preferably 40 ppm of the polymer resin.

The present invention is illustrated and supported by the following examples. These are merely representative examples and optimization details and are not intended to restrict the scope of the present invention in any way.

### Examples: -

### Melt Polymerization:

### Comparative

Purified terephthalic acid was esterified with MEG in 1:2 ratio along with 1.8wt % Isophthalic acid and 2wt % DEG at 260°C. The oligomer obtained was further melt polymerized at 290°C to obtain amorphous polyester prepolymer having IV up to 0.6 dl/g. About 290ppm of antimony was added as a catalyst, 25 ppm P and 25 ppm of Cobalt was added as a thermal stabilizer and colorant to the prepolymer. The low IV prepolymer melt was then extruded out from the reactor in the form of amorphous cylindrical chips. This prepolymer was considered as "Control". These amorphous chips were analyzed for IV, Color and COOH content. These amorphous prepolymer particles were used as precursor for solid-state polymerization.

### Example 1:

Purified terephthalic acid was esterified with monoethylene glycol (MEG) in 1:2 ratio along with 1.8 wt % Isophthalic acid, 2 wt % diethylene glycol (DEG) and Tin oxalate (20 ppm as a metallic tin) in the form of slurry at 260°C. The oligomer obtained was further melt polymerized at 290°C to obtain polyester prepolymer having IV up to 0.6 dl/g. About 290ppm of antimony was added as a catalyst and 25 ppm P and 12 ppm of Cobalt was added as a thermal stabilizer and colorant to the prepolymer. The low IV prepolymer melt was then extruded out from the reactor in the form of amorphous cylindrical chips. These amorphous chips were analyzed for IV,Color and COOH content. These amorphous prepolymer particles were used as precursor for solid-state polymerization.

### Example 2:

Purified terephthalic acid was esterified with monoethylene glycol (MEG) in 1:2 ratio along with 1.8 wt % Isophthalic acid, 2 wt % diethylene glycol (DEG) and Tin oxalate (40 ppm as a metallic tin) in the form of slurry at 260°C. The oligomer obtained was further melt polymerized at 290°C to obtain polyester prepolymer having IV up to 0.6 dl/g. About 290ppm of antimony was added as a catalyst and 25 ppm P and 10 ppm of Cobalt was added as a thermal stabilizer and colorant to the prepolymer. The low IV prepolymer melt was then extruded out from the reactor in the form of amorphous cylindrical chips. These amorphous chips were analysed for IV,Color and COOH content. These amorphous prepolymer particles were used as precursor for solid-state polymerization.

### Example 3:

Purified terephthalic acid was esterified with monoethylene glycol (MEG) in 1:2 ratio along with 1.8 wt % Isophthalic acid, 2 wt % diethylene glycol (DEG) and Dioctyl Tin Oxide(DOTO) (40 ppm as a metallic tin) in the form of powder at 260°C. The oligomer obtained was further melt polymerized at 290°C to obtain polyester prepolymer having IV up to 0.6 dl/g. About 290ppm of antimony was added as a catalyst and 25 ppm P and 25 ppm of Cobalt was added as a thermal stabilizer and colorant to the prepolymer. The low IV prepolymer melt was then extruded out from the reactor in the form of amorphous cylindrical chips. These amorphous chips were analysed for IV, Color and COOH content. These amorphous prepolymer particles were used as precursor for solid-state polymerization. The results of such analysis are shown below:

**Melt Polymerization Comparison:-**

| ID | Sb (ppm) | Sn (ppm) | Co (ppm) | P (ppm) | IPA (%) | Esterification Time (Min) | Polycondensation Time (Min) |
|---|---|---|---|---|---|---|---|
| C | 290 | 0 | 25 | 25 | 1.8 | 214 | 95 |
| E1 | 290 | 20 | 12 | 25 | 1.8 | 204 | 95 |
| E2 | 290 | 40 | 10 | 25 | 1.8 | 200 | 91 |
| E3 (Organotin compound) | 290 | 40 | 25 | 25 | 1.8 | 196 | 91 |

**Amorphous chips Comparison:**

| ID | IV(dl/g) | L* | a* | b* | COOH (meq/Kg) |
|---|---|---|---|---|---|
| C | 0.613 | 63.1 | -0.45 | -0.69 | 23 |
| E1 | 0.613 | 64.6 | -0.27 | -0.86 | 25 |
| E2 | 0.611 | 67.4 | 0.55 | -0.90 | 22 |
| E3 (Organotin compound)** | 0.602 | 63.3 | 0.40 | -4.00 | 20 |

| | | | | | |
|---|---|---|---|---|---|
| ** Chips were having violet tinge | | | | | |

### Solid State Polymerization: -

Amorphous prepolymer particles having IV of 0.6 dl/g obtained according to the examples C, E1, E2 was solid-state polymerized at 212°C (Gas Temperature) under Nitrogen atmosphere to raise the IV up to 1 dl/g.

| ID | SSP IV rate (dl/g/hr) | L* | a* | b* | COOH (meq/Kg) | Acetaldehyde (ppm) |
|---|---|---|---|---|---|---|
| C | 0.0148 | 83.4 | -1.10 | -0.60 | 13 | 0.36 |
| E1 | 0.0153 | 86.2 | -0.29 | -0.69 | 17 | 0.25 |
| E2 | 0.0167 | 87.8 | 0.03 | 0.46 | 15 | 0.22 |
| E3 (Organotin compound) | 0.016 | 86.1 | -0.50 | -1.70 | 11 | 0.26 |

- Improvement in reactivity at all stages observed with the use of present catalyst combination compared to conventional catalyst.
- L* Color improvement observed with said catalyst combination compared to conventional catalyst. Whereas organo tin compound catalyst imparts violet tinge to chips which is not acceptable

### Example 4

This example demonstrates the process for preparing fast reheat polyester resin with inproved colour using the catalyst of the present invention. The results are shown below:

### Data for reheat material (newly added embodiment):

### Melt Polymerization Comparison:-

| **ID** | **Sb (ppm)** | **Sn (ppm)** | **Reheat additive (ppm)** | **Co (ppm)** | **P (ppm)** | **IP A (%)** | **Reheat characteristics (sec)*** | **Esterification Time (Min)** | **Polycondensatio n Time (Min)** |
|---|---|---|---|---|---|---|---|---|---|
| **C1** | 290 | 0 | 0 | 25 | 25 | 1.8 | 53 | 214 | 95 |
| **C2** | 290 | 40 | 0 | 10 | 25 | 1.8 | 53 | 200 | 91 |
| **C3** | 290 | 0 | 6.5 | 25 | 25 | 1.8 | 45 | 209 | 104 |
| **E1** | 290 | 40 | 6.5 | 25 | 25 | 1.8 | 46 | 207 | 96 |

| | | | | | | | | | |
|---|---|---|---|---|---|---|---|---|---|
| ** Time measured during bottle blowing* | | | | | | | | | |

### Amorphous chips Comparison:

| **ID** | **IV(dl/g)** | **L*** | **a*** | **b*** | **COOH (meq/Kg)** |
|---|---|---|---|---|---|
| **C** | 0.617 | 56.1 | -0.11 | -0.98 | 22 |
| **E1** | 0.617 | 59.3 | 0.24 | -0.09 | 23 |

### Solid State Polymerization: -

*Amorphous prepolymer particles having IV of 0.6 dl*/*g obtained according to the examples C, E1, E2 was solid-state polymerized at 212°C (Gas Temperature) under Nitrogen atmosphere to raise the IV up to 1 dl*/*g.*

| **ID** | **SSP IV rate (dl/g/hr)** | **L*** | **a*** | **b*** | **COOH (meq/Kg)** |
|---|---|---|---|---|---|
| **C** | 0.0131 | 77.8 | -0.86 | -2.03 | 16 |
| **E1** | 0.0152 | 79.8 | -0.41 | -2.09 | 15 |

| | | | | | |
|---|---|---|---|---|---|
| • L* color as well as the reactivity improved without affecting the reheat characteristics of PET resin (reheat grade) with the use of present catalyst combination. | | | | | |

## Claims

1. A process for the preparation of polyester in presence of antimony and inorganic tin compound catalyst system comprising of steps
a) esterifying at least one dicarboxylic compound selected from dicarboxylic acid or mono-esters thereof or di-ester thereof or acid anhydride thereof and at least one diol or polyol at temperature in the range of 250°C to 290°C to obtain an esterified mixture;
b) melt polymerizing the esterified mixture at temperature in the range of 260°C to 300°C to obtain polyester prepolymer having IV of 0.3 to 0.6 dl/g;
c) producing prepolymer amorphous particles from the polyester obtained in step (b);
d) solid state polymerizing the amorphous prepolymer particles to obtain a high molecular weight polyester resin having IV of 0.70 dl/g to 1.2 dl/g wherein inorganic tin compound is in stable slurry form prepared at high concentration up to 15% using ball mill without nitrogen blanketing at room temperature and is added at any step of polymerization and antimony compound in solution form prepared in monoethylene glycol is added after esterification reaction.

2. A process as claimed in claim 1 wherein said antimony compound is present in the range of 100 to 400 ppm of elemental antimony by weight of polyester resin, and wherein said inorganic tin compound is present in the range of 5 to 300 ppm of metallic tin by weight of polyester resin.

3. A process as claimed in claim 1, wherein the range of elemental antimony is 280 to 290 ppm.

4. A process as claimed in claim 2 wherein the range of metallic tin is 10 to 50 ppm, preferably 40 ppm.

5. A process as claimed in claim 1 wherein said inorganic tin compound is selected from group consisting of tin oxalates, tin chlorides, tin fluorides, tin sulphate or mixtures thereof

6. A process as claimed in claim 1 wherein said antimony compound is selected from one or more of antimony trioxide, antimony tetraoxides or antimony pentoxides, antimony carboxylates such as antimony triacetate, antimony tristearate, antimony halide such as antimony trichloride or antimony trifluoride.

7. A process as claimed in claim 1 wherein said dicarboxylic acid or its monoesters thereof or di-esters thereof are selected from terephthalic acid, isophthalic acid, naphthalene dicarboxylic acid or 4,4'-biphenyl dicarboxylic or any dicarboxylic acids or monoesters thereof or di-esters thereof or combinations thereof.

8. A process as claimed in claim 1 or 7 wherein said acid anhydride is selected from phthalic anhydride or trimellitic anhydride or pyromellitic anhydride or any anhydride.

9. A process as claimed in claim 1 wherein the monoalcohol, diol or polyol is selected from monoethylene glycol, diethylene glycol, triethylene glycol, propylene glycol, dipropylene glycol, butylenes glycol or 1,4-cyclohexane diol, 2-methyl-2, 3-propane diol, neopentylglycol or any polyol or combinations thereof.

10. A process as claimed in any one of preceding claims wherein the ratio of dicarboxylic acid or monoesters thereof or diesters thereof to diol or polyol ratio is in the range from 1:1 to 1:3.

11. A process for preparing fast reheat polyester resin with improved color which comprises esterifying at least one dicarboxylic acid or mono-esters thereof or di-ester thereof and at least one diol or polyol **characterised in that** said estrification is carried out in the presence of a catalyst system comprising of from 100 to 400 ppm of one or more antimony compounds and from 5 to 300 ppm of one or more inorganic tin metal compounds and one or more of black and gray body absorbing compounds wherein said catalyst reduces the polymerization time at all stages of polyester synthesis and improve resin color with fast reheat property.

12. A process as claimed in claim 11 wherein said one or more black and gray body absorbing compounds are selected from black iron oxide, elemental antimony, carbon black, graphite, copper compounds, charcoal, activated carbon, antimony tin oxide and tin nitride.

## Patentansprüche

1. Verfahren für die Zubereitung von Polyester in Anwesenheit von Antimon und einem anorganischen Zinnverbindungs-Katalysatorsystem, umfassend die folgenden Schritte
a) Verestern von mindestens einer Dicarbon-Verbindung, ausgewählt aus Dicarbonsäure oder Monoestern davon oder Diester davon oder Säureanhydrid davon und mindestens einem Diol oder Polyol bei einer Temperatur im Bereich von 250 °C bis 290 °C, um ein verestertes Gemisch zu erlangen;
b) Schmelzpolymerisieren des veresterten Gemischs bei einer Temperatur im Bereich von 260 °C bis 300 °C, um ein Polyester-Vorpolymer mit einem N von 0,3 bis 0,6 dl/g zu erlangen;
c) Erzeugen von amorphen Vorpolymerpartikeln aus dem Polyester, der in Schritt (b) erlangt wurde;
d) Festkörper-Polymerisieren der amorphen Vorpolymerpartikel, um ein Polyesterharz mit hohem Molekulargewicht zu erlangen, das ein IV von 0,70 dl/g bis 1,2 dl/g hat,
wobei eine anorganische Zinnverbindung in stabiler Schlämme-Form ist, die mit einer hohen Konzentration von bis zu 15 % unter Verwendung von einer Kugelmühle ohne Stickstoff-Schutzvorlage bei Raumtemperatur zubereitet wurde, und bei einem Polymerisierungsschritt hinzugefügt wird, und die Antimon-Verbindung in Lösungsform, die in Monoethylenglykol zubereitet wurde, wird nach der Veresterungsreaktion hinzugefügt.

2. Verfahren nach Anspruch 1 wobei die Antimon-Verbindung im Bereich von 100 bis 400 ppm des elementaren Antimons nach Gewicht des Polyesterharzes vorhanden ist, und wobei die anorganische Zinnverbindung im Bereich von 5 bis 300 ppm des metallischen Zinns nach Gewicht des Polyesterharzes vorhanden ist.

3. Verfahren nach Anspruch 1, wobei der Bereich von elementarem Antimon 280 bis 290 ppm ist.

4. Verfahren nach Anspruch 2 wobei der Bereich von metallischem Zinn 10 bis 50 ppm ist, vorzugsweise 40 ppm.

5. Verfahren nach Anspruch 1 wobei die anorganische Zinnverbindung ausgewählt ist aus der Gruppe bestehend aus Zinnoxalaten, Zinnchloriden, Zinnfluoriden, Zinnsulfaten oder Gemischen davon.

6. Verfahren nach Anspruch 1 wobei die Antimon-Verbindung ausgewählt ist aus einem oder mehreren von Antimontrioxid, Antimontetraoxiden oder Antimonpentoxiden, Antimoncarboxylaten, wie z. B. Antimontriacetat, Antimontristearat, Antimonhalid, wie z. B. Antimontrichlorid oder Antimontrifluorid.

7. Verfahren nach Anspruch 1 wobei die Dicarbonsäure oder ihre Monoester davon oder Diester davon ausgewählt sind aus Terephthalsäure, Isophthalsäure, Naphthalendicarbonsäure oder 4,4'-Biphenyldicarbonsäure oder jeder Dicarbonsäure oder Monoestern davon oder Diestern davon oder Kombinationen davon.

8. Verfahren nach Anspruch 1 oder 7, wobei das Säureanhydrid ausgewählt ist aus Phthalsäureanhydrid oder Trimellitsäureanhydrid oder Pyromellitsäureanhydrid oder jedem Anhydrid.

9. Verfahren nach Anspruch 1 wobei der Monoalkohol, das Diol oder Polyol ausgewählt ist aus Monoethylenglykol, Diethylenglykol, Triethylenglykol, Propylenglykol, Dipropylenglykol, Butylenglykol oder 1,4-Cyclohexandiol, 2-Methyl-2,3-propandiol, Neopentylglykol oder jedem Polyol oder Kombinationen davon.

10. Verfahren nach einem der vorherigen Ansprüche, wobei das Verhältnis von Dicarbonsäure oder Monoestern davon oder Diestern davon zu Diol oder Polyol im Bereich von 1:1 bis 1:3 ist.

11. Verfahren zum Zubereiten von schnell nacherhitzendem Polyesterharz mit verbesserter Farbe, das ein Verestern von mindestens einer Dicarbonsäure oder Monoestern davon oder Diester davon und mindestens einem Diol oder Polyol umfasst, **dadurch gekennzeichnet, dass** das Verestern in der Anwesenheit eines Katalysatorsystems durchgeführt wird, das von 100 bis 400 ppm von einer oder mehreren Antimon-Verbindungen und von 5 bis 300 ppm von einer oder mehreren anorganischen Zinnmetallverbindungen und einer oder mehreren Schwarz- und Graukörper-absorbierenden Verbindungen umfasst, wobei der Katalysator die Polymerisierungszeit in allen Phasen der Polyestersynthese reduziert und die Harzfarbe mit schneller Nacherhitzungseigenschaft verbessert.

12. Verfahren nach Anspruch 11 wobei die eine oder mehreren Schwarz- und Graukörper-absorbierenden Verbindungen ausgewählt sind aus eisenoxidschwarz, elementarem Antimon, kohlenstoffschwarz, Grafit, Kupferverbindungen, Kohle, Aktivkohle, Antimonzinnoxid und Zinnnitrid.

## Revendications

1. Procédé de préparation de polyester en présence d'un système de catalyseur d'antimoine et de composé d'étain inorganique, comprenant les étapes suivantes
a) estérification d'au moins un composé dicarboxylique choisi parmi l'acide dicarboxylique ou des monoesters de celui-ci ou diesters de celui-ci ou d'un anhydride d'acide de celui-ci et d'au moins diol ou polyol à une température dans la plage de 250 °C à 290 °C pour obtenir un mélange estérifié ;
b) polymérisation à l'état fondu du mélange estérifié à une température dans la plage de 260 °C à 300 °C pour obtenir un prépolymère de polyester ayant une VI de 0,3 à 0,6 dL/g ;
c) production de particules amorphes de prépolymère à partir du polyester obtenu à l'étape (b) ;
d) polymérisation à l'état solide des particules de prépolymère amorphes pour obtenir une résine de polyester de poids moléculaire élevé ayant une VI de 0,70 dL/g à 1,2dL/g
le composé d'étain inorganique se présentant sous forme de suspension épaisse stable préparée à une concentration élevée jusqu'à 15 % à l'aide d'un broyeur à boulets sans couverture d'azote à température ambiante et étant ajouté à une étape quelconque de polymérisation et le composé d'antimoine sous forme de solution préparé dans du monoéthylène glycol étant ajouté après réaction d'estérification.

2. Procédé tel que revendiqué dans la revendication 1, dans lequel ledit composé d'antimoine est présent dans une plage de 100 à 400 ppm d'antimoine élémentaire par poids de résine de polyester, et dans lequel ledit composé d'étain inorganique est présent dans la plage de 5 à 300 ppm d'étain métallique par poids de résine de polyester.

3. Procédé tel que revendiqué dans la revendication 1, dans lequel la plage d'antimoine élémentaire est de 280 à 290 ppm.

4. Procédé tel que revendiqué dans la revendication 2, dans lequel la plage d'étain métallique est de 10 à 50 ppm, de préférence 40 ppm.

5. Procédé tel que revendiqué dans la revendication 1, dans lequel ledit composé d'étain inorganique est choisi dans le groupe constitué par les oxalates d'étain, les chlorures d'étain, les fluorures d'étain, le sulfate d'étain ou des mélanges de ceux-ci.

6. Procédé tel que revendiqué dans la revendication 1, dans lequel ledit composé d'antimoine est choisi parmi au moins l'un du trioxyde d'antimoine, des tétraoxydes d'antimoine ou des pentoxydes d'antimoine, des carboxylates d'antimoine tels que le triacétate d'antimoine, le tristéarate d'antimoine, d'un halogénure d'antimoine tel que le trichlorure d'antimoine ou le trifluorure d'antimoine.

7. Procédé tel que revendiqué dans al revendication 1, dans lequel ledit acide dicarboxylique ou des monoesters de celui-ci ou diesters de celui-ci sont choisis parmi l'acide téréphtalique, l'acide isophtalique, l'acide naphtalène dicarboxylique ou l'acide 4,4'-biphényl dicarboxylique ou tout autre acide dicarboxylique ou des monoesters de celui-ci ou diesters de celui-ci, ou des combinaisons de ceux-ci.

8. Procédé tel que revendiqué dans la revendication 1 ou 7, dans lequel ledit anhydride d'acide est choisi parmi l'anhydride phtalique ou l'anhydride trimellitique ou l'anhydride pyromellitique ou tout autre anhydride.

9. Procédé tel que revendiqué dans la revendication 1, dans lequel le monoalcool, diol ou polyol est choisi parmi le monoéthylène glycol, le diéthylène glycol, le triéthylène glycol, le propylène glycol, le dipropylène glycol, le butylène glycol ou 1,4-cyclohexane diol, le 2-méthyl-2,3-propane diol, le néopentylglycol ou tout polyol ou des combinaisons de ceux-ci.

10. Procédé tel que revendiqué dans l'une quelconque des revendications précédentes, dans lequel le rapport entre l'acide dicarboxylique ou des monoesters de celui-ci ou diesters de celui-ci et le diol ou le polyol est dans la plage de 1:1 à 1:3.

11. Procédé de préparation d'une résine de polyester à réchauffement rapide de couleur améliorée qui comprend l'estérification d'au moins un acide dicarboxylique ou de monoesters de celui-ci ou diesters de celui-ci et d'au moins un diol ou polyol, **caractérisé en ce que en ce que** ladite estérification est réalisée en présence d'un système de catalyseur comprenant 100 à 400 ppm d'au moins un composé d'antimoine et 5 à 300 ppm d'au moins un composé d'étain métallique inorganique et au moins un composé absorbant les corps noirs et gris, ledit catalyseur réduisant la durée de polymérisation à tous les stades de la synthèse de polyester et améliorant la couleur de la résine avec une propriété de réchauffement rapide.

12. Procédé tel que revendiqué dans la revendication 1 l, dans lequel ledit au moins un composé absorbant les corps noirs et gris est choisi parmi l'oxyde de fer noir, l'antimoine élémentaire, le noir de charbon, le graphite, les composés de cuivre, le charbon, le charbon actif, l'oxyde d'antimoine et d'étain et le nitrure d'étain.
